# EUROPEAN PATENT APPLICATION

(11) **EP 0 762 717 A2**
(43) Date of publication of application: **12.03.1997**
(21) Application number: 96304992.9
(22) Date of filing: 05.07.1996
(51) Int. Cl.: H04M 3/56

(54) **Teleconferencing**

(30) Priority: 20.07.1995 GB 9514863
(71) Applicant: GPT LIMITED, Coventry, CV3 1HJ (GB)
(72) Inventor: Marples, David John, Draycott, Derby, DE72 3QS (GB)
(74) Representative: Branfield, Henry Anthony

(57) **Abstract**

A telecommunications apparatus is arranged to receive a monophonic speech signal from one or more participants and there are processing means to process the signal so as to produce stereophonic signals containing spatial information whereby a further participant will receive an audible impression of the simulated relative location of the one or more participants.

## Description

Teleconferencing is a telecommunications facility to allow more than two parties to take part in a conversation. It is normally achieved by means of a 'Conference Bridge' in a Private Automatic Branch Exchange (PABX) which terminals utilise in order to create the teleconference. Simply put, the conference bridge mixes the transmit paths from each participant to form a single signal which is delivered to each participant. Thus, each party in a conference hears the conversation of the other parties in the conference.

Teleconferencing is widely used, but has limitations, mainly due to the constraints of the analogue telephone network. Users often complain that they cannot tell which member of a conference is talking and they cannot differentiate between individual voices. The present invention addresses these limitations, but also goes much further.

According to the present invention there is provided a telecommunications apparatus arranged to receive a monophonic speech signal from a first participant and including processing means to process the signal so as to produce stereophonic signals containing spatial information whereby a further participant will receive an audible impression of the simulated relative location of the first participant.

The present invention will now be described by way of example, with reference to the accompanying drawings, in which:-
Figure 1 illustrates a stereo audio layout for a three-party conference;
Figure 2 illustrates a stereo audio layout for a five-party conference;
Figure 3 illustrates a stereo audio layout for a seven-party conference;
Figure 4 illustrates a stereo audio layout having two sub-conferences communicating through a common spokesperson;
Figure 5 illustrates a stereo audio layout for a seven-party conference where one conference has available an input from a "right-hand man";
Figure 6 illustrates a stereo audio layout used in conjunction with a "virtual world";
Figure 7 provides a table which illustrates information flows for providing a visual representation of a conference;
Figure 8 illustrates one possible visual representation of a conference;
Figure 9 is a representation of the computer hardware used for providing a visual representation of a conference; and
Figure 10 is a representation of the computer hardware used for providing a stereo audio representation from a PC in addition to the visual representation of a conference.

A conference bridge is described to provide stereo signals to each conference participant. The left and right signals to each participant are constructed from the transmit paths of each of the other conference members and are processed to give spatial information providing a stereo image. Delivery of these stereo signals to participants would use existing communication capabilities, e.g. a pair of Integrated Services Digital Network (ISDN) B channels. Users with legacy equipment which is incompatible with the provision of the stereo capability could participate in such a bridge using existing conference techniques.

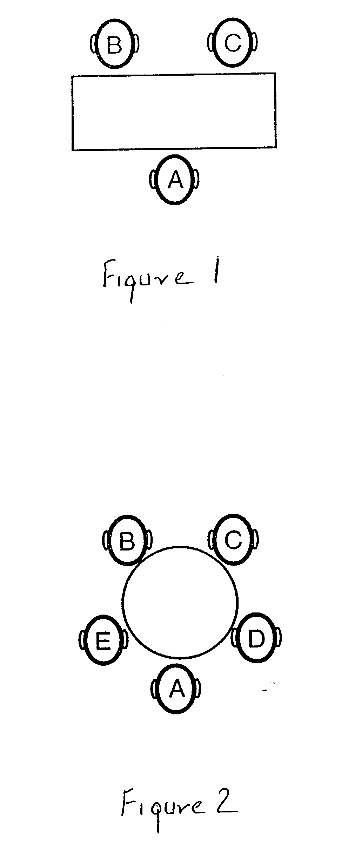

For example, a three party conference could be spatially arranged for a user A as shown in Figure 1.

B & C would be heard as if they were to be in front of and to the left of A and in front of and to the right of A respectively. The central block is a 'table' around which the conference takes place. There are other metaphors which could be used, for example a five party conference (which is stretching the capability of current conference bridges) as shown in Figure 2.

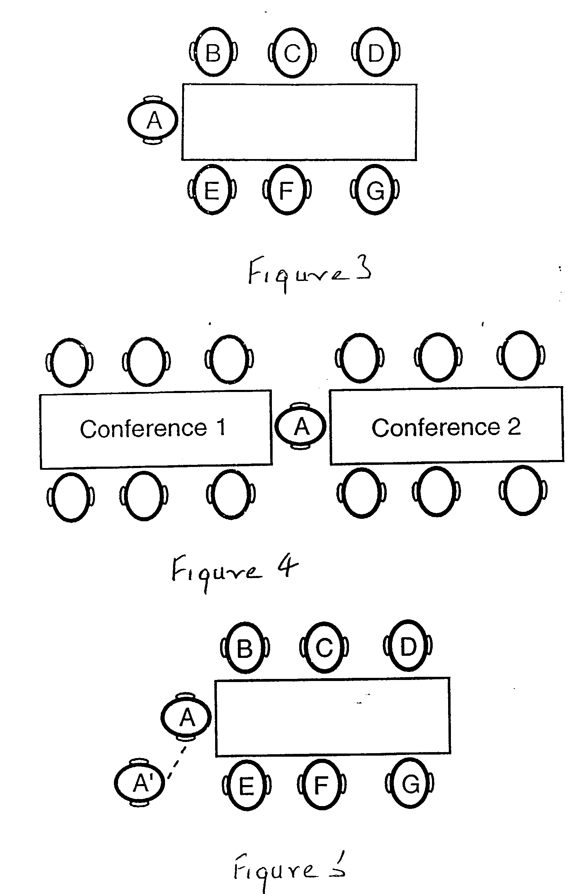

A seven party conference could be provided as shown in Figure 3.

There is no reason why the conference has to take place around a 'virtual table' and other metaphors could be used. This spatial representation could be differently configured for each of the participants in the conference. Typically, this might be used to allow everyone to think that they were sitting at the head of the table.

Once a Digital Signal Processor (DSP) has been introduced into the conference bridge, there are a number of things that can be done in order to further enhance the conference capability. Echoes and various other audio effects could be introduced to further re-inforce the soundscape - perhaps making the conference sound as if it is taking place in a boardroom, or bathroom, as appropriate. Again, each participant in the conference can have a totally independent representation of it.

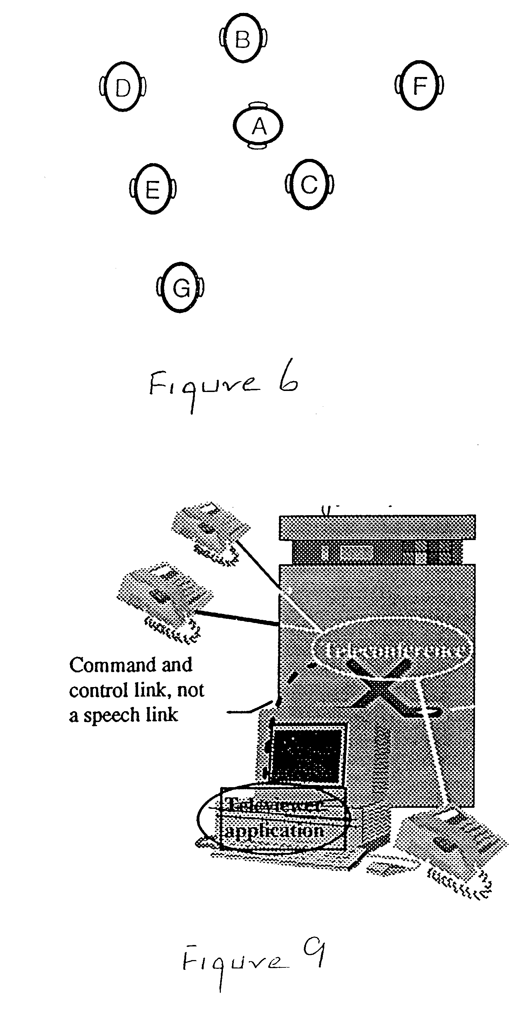

Since there are no sidetone problems if the entire conference is digital, parties do not need to be talking to all of the other parties that are present and sub-groups within the overall conference can be created. Perhaps a 'spokesperson' arrangement whereby sub-groups only communicate via a single party to the rest of the conference could be implemented as shown in Figure 4, the spokesperson being A.

Or perhaps a 'right hand man' could be provided - a participant who sits to right of the soundscape but whose input into the conference can only be heard by one particular person as shown in Figure 5.

There is very little limit to the arrangements that can be created. For example, once partial conferences have been implemented, it then becomes a simple matter to enhance other services; there are a number of changes that can be made to enhance the user interface of voice calls using stereo imagery.
- The conventional 'broker-call' can be enhanced to 'locate' each of the parties that are "shuttled between" in the soundscape.
- An operator could intrude to the far left of a call.
- A trainee could receive instruction while on a call from someone sat to their left.

There is no obvious limit to the number of enhancements that could be made. One of the most difficult problems is the user interface, user communication with the bridge may be carried out via signalling messages, e.g. ISDN D-channel messages, such that the user interface is left largely to the terminating devices.

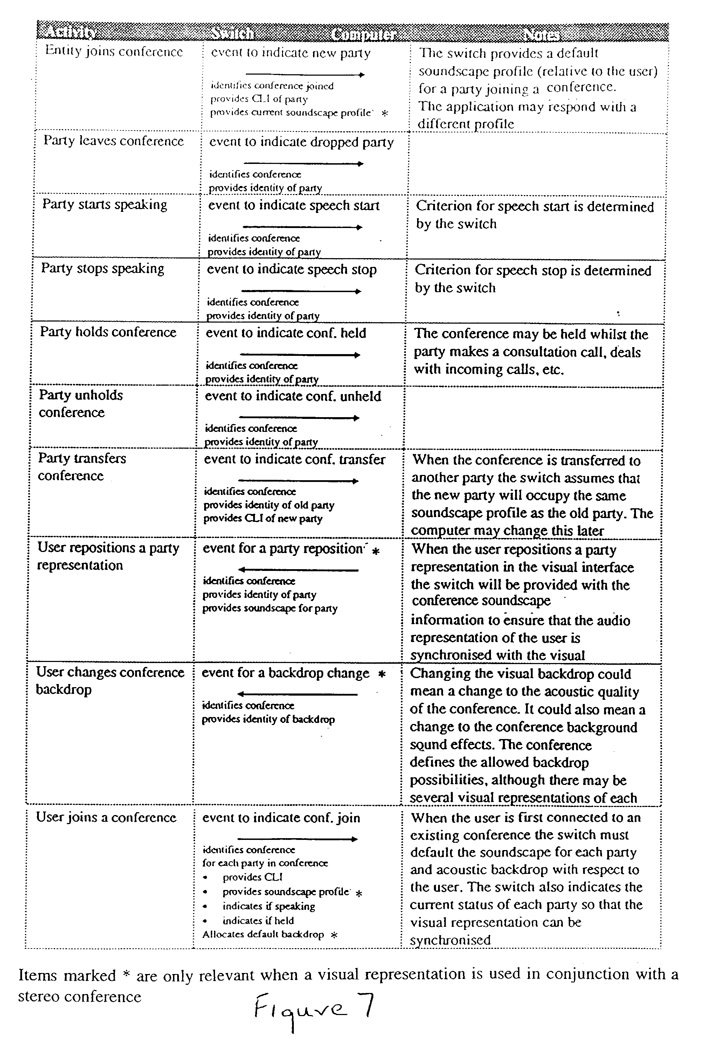

If the relative attenuation of the left and right channels (and possibly the other audio effects) were to be controlled via signalling messages, then spatialised audio for use in virtual worlds could be provided. The characteristics of each source (attenuation, relative position in the soundscape etc.) being controlled by the terminating device, the world visualisation device. Consider a world with members A-G in the arrangement as shown in Figure 6.

B and G would be heard by A to the left and right respectively and D, E and F would be much fainter, G possibly being so distant as to be inaudible.

An additional aid to teleconferencing as described above or a stand-alone feature is to provide a visual representation of a conference for a user so as to automate the tracking of activities within the conference.

The two embodiments can be independent of each other but the combination of the two can further enhance the use of the conference facility.

In the second part of the description below the conferencee using the visual aid is termed the user, other conferences are termed parties whilst non-conferencees are termed entities. Any of the parties may be using their own visual or stereo representation, or both.

A computer application is run in, for example, a user's desktop computing environment (e.g. Windows. OS/2, Macintosh, Unix) to provide a visual representation of the conference occurring at the user's telephone.

The representation could include:-
1. Individual parties within a conference
2. Identification of current speakers
3. A 'setting' scene (e.g. conference room)
4. A backdrop scene (e.g. external scene)
5. A conference table

The production of a visual and/or stereo representation to aid identification of parties and speakers to augment a telephony conference is provided by the visual aid described herein.

In order to provide the visual representation it would be necessary for the switch hosting the conference to provide the following event indicators;
1. Indication and identification of users joining or leaving the conference.
2. Indication of a party's action which may affect their 'presence' within the conference (e.g. if they put the conference on hold from their perspective).
3. Identification of parties currently speaking within a conference.

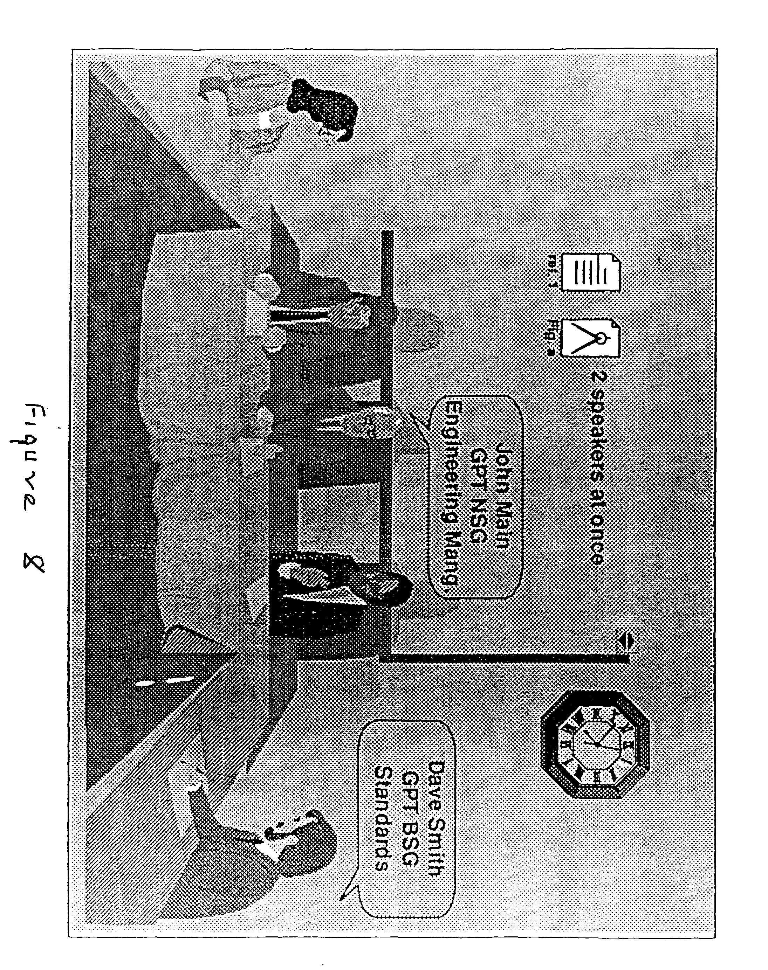

The techniques and mechanisms which could comprise the interface for the switch to provide the above already exist (e.g. Computer -Telecommunication Integration (CTI) interfaces, Digital Signal Processing). However example message flows are given in Figure 7, where the table indicates information flows, but does not identify confirmation or error responses which may be associated with these flows. Items marked * are only relevant when the visual and audio applications are used together

Figure 8 illustrates some possibilities for the main components of a visual representation of a conference.

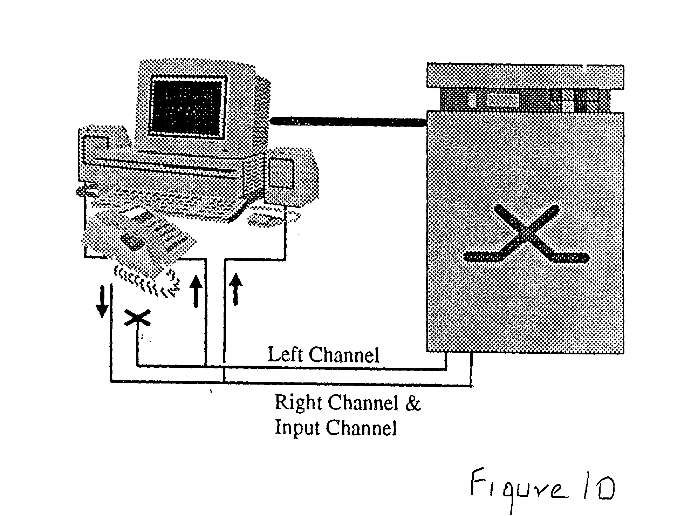

Below the components are considered further:
1. Representation of parties
   As an alternative to the viewpoint of the user which is shown in Figure 8, other viewpoints are possible (e.g. plan, over-shoulder, roving camera)
   Predefined 'realistic clipart' figures could be used to distinguish between parties in the conference and which differentiate on sex, age, beard etc.
   These would be selected by the user from the range supported by the application to correspond to the party selected. The application may even support a pick 'n' mix approach to putting together figures (e.g. heads, clothes, hair, colour).
   A suitable figure would need to be defined for each party. The representation would be changeable under the user's control without disrupting the conference. It should also be possible for the application to choose the figures.
   If a party is not automatically recognised by the application then a default figure (e.g. an outline) would need to be provided until the user makes a more appropriate choice. It should be noted that other representations, or views, may use different figures, which may be just simple icons.
2. Identification of current speakers
   The Call identification information provided by the switch may be used to access the users details from a database (e.g. directory). Details given to identify the user may range from a simple identification (e.g. just the CLI) to notes pertaining to the speaker which are maintained by the user. The use of CLI may cause problems where a 'phone is used by more than one person, or a dedicated 'phone is provided for this service. Normally the user's name would be expected to be provided.
   The identification could be given in full on first entering the conference and an abbreviated identification given when speaking.
   Figure 8 uses speech bubbles to identify new users and current speakers but many other mechanisms are possible.
3. The figure illustrates trestle tables to construct an open conference table. It uses a simple backdrop but with a 'whiteboard' for computer to computer communication (e.g. via a LAN or separate call) especially where the 'whiteboard' is integrated with the scene.
4. The clock is one of many possible functional decorations which may be configured into the scene by the user.
   A typical architecture is illustrated in Figure 9. The application will typically reside in the user's PC. It is linked to the switch, where the teleconference is centred, by a CTI command and control interface. The application does not require a speech link, the user interacts with the conference via the telephone.

The CTI link may be one of the following types:
- 1st party where the application can only exercise the same control over the conference as the user from the telephone.
- 3rd party where the application is able to affect other parties.

The type of link will affect the features possible.

Control of the conference is described below and includes the provision of an interface by which the user can control the conference.

Typical features are:
1. Add new parties to conference
   This could be effected by selecting a representation for the required entity and attempting to place the representation into the conference. The mechanism by which the entity is added to the conference may, or may not, involve a consultation call to the entity. This is an implementation issue which is affected by the type of conference required.
2. Remove parties from the conference
   If allowed, then terminating the presence of a party's representation in the conference would cause the party's connection to the conference to be dropped.
3. 'Tear down' the conference
   Terminating the conference in the visual representation would either drop the user's connection to the conference or, if allowed, drop the connections of all the parties to the conference.
4. Allow access to multiple simultaneous conferences
   Multiple windows (either on screen or switched screen) would allow the user to switch between conferences.
5. Putting the conference on hold
   This would allow the user to establish another call (or conference)
6. Diverting the conference to another user
   Passing a representation of the whole conference (e.g. an icon) to another entity could be made to have the effect of transferring the conference. Normally this would involve some form of prior consultation.

Some of these control features are only appropriate to specific (controller) parties in the conference as they provide the ability to affect how other parties participate in the conference.

The techniques described above are also applicable to the control of non-conference calls (although the visual representation would probably need to be changed).

Configuration of the conference could be a mode of operation in which the application would act as a front end, as a Graphical User Interface (GUI), to control the form of conference where the soundscape (audible 3D representation of the conference) perceived by the user is configurable by that user. To achieve this the conference uses a soundscape profile for each party which determines how the user hears that party (acoustic properties).

Via the application it will be possible to:
1. Alter the acoustic position of parties by repositioning their visual representation. The new position that the user gives to a party is used to calculate a new soundscape profile for the party involved so that the party's acoustic position relative to the user corresponds to the visual representation.
2. Alter the soundscape plan by changing the 'conference table' topology.
3. Alter the background soundscape plan by altering the conference 'setting' scene. This will impact the general affects that the conference can apply to voices of parties, e.g. attenuation, muffling, echo etc.
4. For fun, alter the background sound effects by altering the conference backdrop.

| | | |
|---|---|---|
| e.g. | WAVES | for a beach backdrop |
| | BIRDS | for a woodland backdrop |
| | HOOTS | for a nocturnal backdrop |
| | WIND | for a mountain top backdrop |
| | CITY | for a sound backdrop |
| | MUSIC | for an auditorium backdrop |

The stereo output may be fed to the PC which is equipped to provide stereo sound output. This would avoid having to use a specially developed telephone handset which was capable of outputting stereo sound. It would also allow for the possibility of compressing and multiplexing the stereo channels down into a single channel with the PC doing the decoding.

To achieve this the telephone would need the ability to switch off output, allowing the PC to perform all the output, and only accept a non-stereo feed.

Instead of figures or icons to represent parties in a conference an iconised video window could be used showing each party. This video feed could be integrated into the conference scene (e.g. sized to fit) instead of a figure representation but still provide all the services that would have been provided to a figure representation (e.g. speaker induction). The video would normally be a live video of the party but could also be a still snapshot.

A flexible approach to visualising a telephone conference is provided. This visual application could also be used with the soundscape conference application to synchronise the visual and audible representation of a conference.

There are a number of possible scenarios for implementing this proposal:
1. With an unaltered conference bridge where it will be possible to show the user who is participating in the conference at any one time.
2. With a conference bridge that has been enhanced with speech level detection DSPs on inputs to the conference where the application will be able to additionally show who is speaking at any time.
3. With a stereo enhanced conference bridge (including speech level detection DSPs) where the visual application will be able to synchronise with the acoustic positioning of parties in the conference. It will also allow the user to control the soundscape for the conference.

In all the above scenarios the user will also be able to use the visual application to control the conference:
a) With a 1st party CTI link (e.g. Telecommunication Application Programming Interface (TAPI)) the visual application will be able to control the users participation in the conference.
b) With a 3rd party CTI link (e.g. Telephony Server Application Programming Interface (TSAPI)) the visual application will potentially be able to control the participation of all parties in the conference, including the user.

The visual interface provides an intuitive method for controlling a normal or stereo enhanced conference.

Finally, it may be noted that the use of the visual application is not restricted to conferences but may also be used in conjunction with normal two party calls.

## Claims

1. A telecommunications apparatus arranged to receive a monophonic speech signal from a first participant and including processing means to process the signal so as to produce stereophonic signals containing spatial information whereby a further participant will receive an audible impression of the simulated relative location of the first participant.

2. A telecommunications apparatus as claimed in Claim 1, further including a conference bridge to receive a monophonic speech signal from each of a plurality of participants and wherein the processing means is able to process each monophonic speech signal so as to produce therefrom stereophonic signals containing spatial information whereby each participant receives the stereophonic signals from each of the other participants and will receive an audible impression of a simulated relative location of each of the other participants.

3. A telecommunications apparatus as claimed in Claim 1 or 2, wherein transmission of the stereophonic signals is by the B-channel of an Integrated Services Digital Network (ISDN) link.

4. A telecommunications apparatus as claimed in Claim 2 or 3, wherein the stereophonic signals are configured differently for different participants.

5. A telecommunications apparatus as claimed in Claim 2 or 3 wherein the stereophonic signals are configured dynamically.

6. A telecommunications apparatus as claimed in any preceding claim, wherein the processing means is a Digital Signal Processor.

7. A telecommunications apparatus substantially as hereinbefore described with references to and as illustrated in Figures 1 to 6 of the accompanying drawings.

8. A telecommunications apparatus as claimed in any preceding claim and further including processing means and a visual display whereby participants in a conference using the conference bridge and connected thereto are represented on the display.

9. An apparatus as claimed in Claim 8, wherein the processing means includes a desktop computer.

10. An apparatus as claimed in Claim 8 or 9, wherein the representation of participants includes a visual indication of a current speaker.

11. An apparatus as claimed in Claim 8, 9 or 10, wherein the display includes a representation of a location for the conference.

12. An apparatus as claimed in anyone of Claims 8 to 11, wherein participants are identified by the Calling Line Identity (CLI) of their respective connection to the conference bridge.

13. An apparatus as claimed in any of Claims 8 to 12, wherein the representation of a participant is selected dependent on the CLI of the participant.

14. An apparatus as claimed in any one of Claims 8 to 13, wherein one or more participants are able to modify the display and thereby cause a corresponding change to the telecommunication environment.
